(19) Europäisches Patentamt
European Patent Office
Office européen des brevets

(11) **EP 4 718 917 A1**

(12) **EUROPEAN PATENT APPLICATION**
published in accordance with Art. 153(4) EPC

(43) Date of publication:
**01.04.2026   Bulletin 2026/14**

(21) Application number: 24811392.0

(22) Date of filing: **22.05.2024**

(51) International Patent Classification (IPC):
**H04W 52/02** (2009.01)    **H04W 76/28** (2018.01)
**H04W 72/232** (2023.01)    **H04W 74/0808** (2024.01)
**H04W 24/08** (2009.01)    **H04W 52/14** (2009.01)

(52) Cooperative Patent Classification (CPC):
**H04W 24/08; H04W 52/02; H04W 52/14;**
**H04W 72/232; H04W 74/0808; H04W 76/28;**
Y02D 30/70

(86) International application number:
**PCT/KR2024/006892**

(87) International publication number:
**WO 2024/242453 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   22.05.2023   KR 20230065769

(71) Applicant: **LG Electronics Inc.**
**Yeongdeungpo-gu**
**Seoul 07336 (KR)**

(72) Inventors:
• **MYUNG, Sechang**
  **Seoul 06772 (KR)**
• **KIM, Seonwook**
  **Seoul 06772 (KR)**
• **YANG, Suckchel**
  **Seoul 06772 (KR)**
• **LEE, Youngdae**
  **Seoul 06772 (KR)**

(74) Representative: **Plasseraud IP**
**104 Rue de Richelieu**
**CS92104**
**75080 Paris Cedex 02 (FR)**

(54) **METHOD, USER EQUIPMENT, PROCESSING DEVICE, AND STORAGE MEDIUM FOR RECEIVING DOWNLINK SIGNAL, AND METHOD AND BASE STATION FOR TRANSMITTING DOWNLINK SIGNAL**

(57)    This UE may: receive a cell DTX configuration for a cell on a shared spectrum, wherein the cell DTX configuration includes information about an active duration of a cell DTX cycle, information about a periodicity of the cell DTX cycle, and information about a starting time point of the cell DTX cycle; determine an active period of the cell DTX cycle on the basis of the cell DRX configuration; receive information about a starting time point of an actual active period within the periodicity of the cell DTX cycle. wherein the starting time point of the actual active period is within the active period; and perform downlink reception on the cell during the actual active period.

**FIG. 17**

Receive cell DTX configuration for cell on shared spectrum — S1701

Receive information regarding starting time of actual active period within periodicity of cell DTX cycle according to cell DTX configuration — S1703

Receive downlink signal on cell during actual active period — S1705

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

Another object of the present disclosure is to provide methods and procedures for transmitting/receiving downlink signals to achieve network energy conservation.

Another object of the present disclosure is to provide methods and procedures for transmitting/receiving uplink signals to enable network energy saving.

Another object of the present disclosure is to provide methods and procedures for applying cell discontinuous (DTX)/discontinuous reception (DRX) on a shared spectrum.

The objects to be achieved with the present disclosure are not limited to what has been particularly described hereinabove and other objects not described herein will be more clearly understood by persons skilled in the art from the following detailed description.

### Technical Solution

In an aspect of the present disclosure, a method for receiving a downlink signal by a user equipment (UE) in a wireless communication system is provided.

In another aspect of the present disclosure, a UE for receiving a downlink signal in a wireless communication system is provided. The UE includes at least one transceiver, at least one processor, and at least one computer memory operably connectable to the at least one processor and storing instructions that, when executed, cause the at least one processor to perform operations.

In another aspect of the present disclosure, a processing device is provided. The processing device includes at least one processor, and at least one computer memory operably connectable to the at least one processor and storing instructions that, when executed, cause the at least one processor to perform operations. The storage medium stores at least one program code including instructions that, when executed, cause at least one processor to perform operations.

The method of the UE or the operations in the UE, the processing device, or the storage medium may include receiving a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle, determining an active period of the cell DTX cycle based on the cell DRX configuration, receiving information regarding a starting time of an actual active period within the periodicity of the cell DTX cycle, wherein the starting time of the actual active period is within the active period, and performing downlink reception on the cell during the actual active period.

In another aspect of the present disclosure, a method for transmitting a downlink signal by a base station (BS) in a wireless communication system is provided.

In another aspect of the present disclosure, a BS for transmitting a downlink signal in a wireless communication system is provided. The BS includes at least one transceiver, at least one processor, and at least one computer memory operably connectable to the at least one processor and storing instructions that, when executed, cause the at least one processor to perform operations.

The method of the BS or the operations of the BS may include transmitting a cell DTX configuration for a cell on a shared spectrum, wherein the cell DTX configuration includes information regarding an active duration of a cell DTX cycle, information regarding a periodicity of the cell DTX cycle, and information regarding a starting time of the cell DTX cycle, determining a starting time of an actual active period in which downlink transmissions are possible on the cell, within an active period of the cell DTX cycle based on the cell DRX configuration, transmitting information regarding the starting time of the actual active period within the periodicity of the cell DTX cycle, and performing downlink transmission on the cell during the actual active period.

In each aspect of the present disclosure, a duration of the actual active period may be equal to the active duration of the cell DTX cycle.

In each aspect of the present disclosure, an end of the actual active period may be identical to an end of the active period of the cell DTX cycle.

In each aspect of the present disclosure, the information regarding the starting time of the actual active period may be provided via group-common downlink control information.

In each aspect of the present disclosure, the information regarding the starting time of the actual active period may be provided via a media access control control element.

In each aspect of the present disclosure, receiving or transmitting the information regarding the starting time of the actual active period may include receiving or transmitting a downlink control information format.

In each aspect of the present disclosure, a time unit in which the downlink control information format is detected may be determined as the starting time of the actual active period.

In each aspect of the present disclosure, the downlink control information format may include information regarding a channel occupancy time (COT) duration.

In each aspect of the present disclosure, the COT duration may be determined to be a duration of the actual active period.

In each aspect of the present disclosure, a configuration for a time window within the cell DTX cycle, in which the actual active period is startable, may be provided to the UE by the BS.

In each aspect of the present disclosure, the method of the UE or the BS or the operations in the UE, the processing device the storage medium, or the BS may include determining that there is no ON duration in a periodicity including the time window, based on the actual active period not starting within the time window.

The foregoing solutions are merely a part of the examples of the present disclosure and various examples into which the technical features of the present disclosure are incorporated may be derived and understood by persons skilled in the art from the following detailed description.

## Advantageous Effects

According to implementations of the present disclosure, energy saving methods and procedures for a network, base station (BS), and/or user equipment (UE) may be provided.

According to implementations of the present disclosure, methods and procedures for transmitting/receiving a downlink signal may be provided to enable energy saving for a network, BS, and/or UE.

According to implementations of the present disclosure, methods and procedures for transmitting/receiving an uplink signal may be provided to enable energy saving for a network, BS, and/or UE.

According to implementations of the present disclosure, methods and procedures for applying cell DTX/DRX on a shared spectrum may be provided.

The effects according to the present disclosure are not limited to what has been particularly described hereinabove and other effects not described herein will be more clearly understood by persons skilled in the art related to the present disclosure from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:

FIG. 1 illustrates an example of a communication system 1 to which implementations of the present disclosure are applied;

FIG. 2 is a block diagram illustrating examples of communication devices capable of performing a method according to the present disclosure;

FIG. 3 illustrates another example of a wireless device capable of performing implementation(s) of the present disclosure;

FIG. 4 illustrates an example of a frame structure used in a 3rd generation partnership project (3GPP)-based wireless communication system;

FIG. 5 illustrates a resource grid of a slot;

FIG. 6 illustrates physical channels and a signal transmission/reception procedure using the physical channels in a 3rd generation partnership project based (3GPP-based) communication system as an exemplary wireless communication system;

FIG. 7 illustrates an example of physical downlink shared channel (PDSCH) time domain resource assignment (TDRA) by a physical downlink control channel (PDCCH) and an example of physical uplink shared channel (PUSCH) TDRA by the PDCCH;

FIG. 8 illustrates a hybrid automatic repeat request-acknowledgement (HARQ-ACK) transmission/reception procedure;

FIG. 9 illustrates a method of occupying a resource in an unlicensed band;

FIG. 10 illustrates a bandwidth part (BWP) including a plurality of LBT-SBs in an unlicensed band;

FIG. 11 illustrates a flow of a CAP operation of a BS for downlink signal transmission by the BS through an unlicensed band;

FIG. 12 illustrates a flow of a Type 1 CAP operation of a UE for uplink signal transmission, FIG. 13 illustrates a discontinuous reception (DRX) operation applicable to implementation(s) of the present disclosure;

FIG. 14 illustrates a case in which a long DRX cycle and a short DRX cycle are configured;

FIG. 15 illustrates a problem encountered when a cell DTX/DRX configuration is applied to an unlicensed band;

FIG. 16 illustrates timings for a fixed based equipment (FBE);

FIG. 17 illustrates a DL signal reception flow at a UE according to some implementations of the present disclosure; and

FIG. 18 illustrates a DL signal transmission flow at a BS according to some implementations of the present disclosure.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

The UE may be configured with a PUCCH-sSCell, which is an Scell for PUCCH cell switching, in addition to the Pcell and the PUCCH Scell. For example, the UE may be provided with the PUCCH-sSCell by an RRC parameter *pucch-sSCell*. The UE may be provided with a periodic cell switching pattern for PUCCH transmissions by an RRC parameter *pucch-sSCellPattern*. Each bit of *pucch-sSCellPattern* may correspond to a slot according to a reference subcarrier spacing (SCS) configuration, and indicate the PCell or the PUCCH-sSCell as a cell for PUCCH transmissions during the slot of the reference SCS configuration. The UE does not transmit a PUCCH on a cell which is not indicated as a cell for PUCCH transmissions out of the PCell and the PUCCH-sSCell by the periodic cell switching pattern. When the UE is configured with PUCCH cell switching based on a dynamic indication in a DCI format, the DCI format associated with generation of HARQ-ACK information by the UE may include a PUCCH cell indicator field indicating whether a PUCCH transmission with the HARQ-ACK information from the UE is on the PCell or the PUCCH-sSCell.

In the present disclosure, the term PUCCH cell is used to refer to a cell on which PUCCH resources are configured. The PCell, the PUCCH Scell, or the PUCCH-sSCell may correspond to a PUCCH cell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

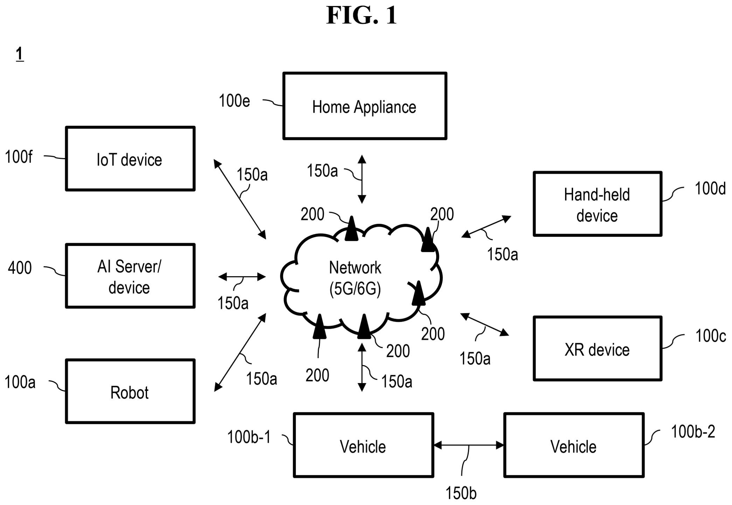

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

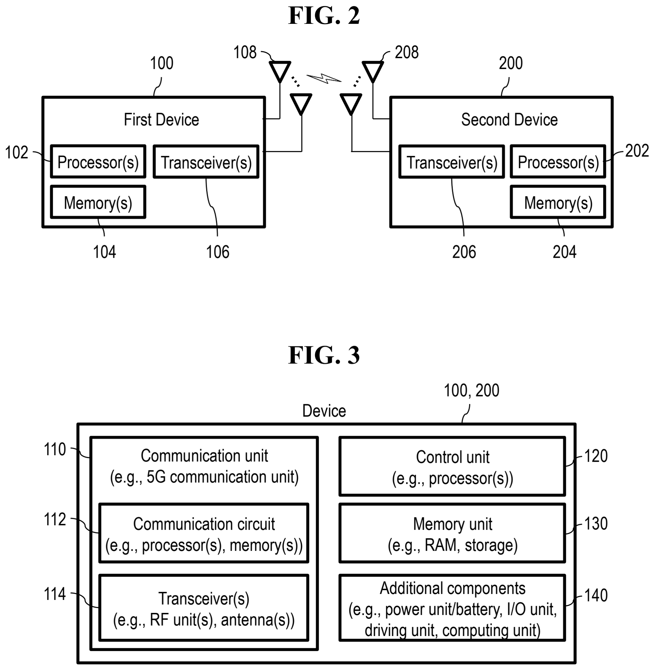

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/-proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/-proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-volatile) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

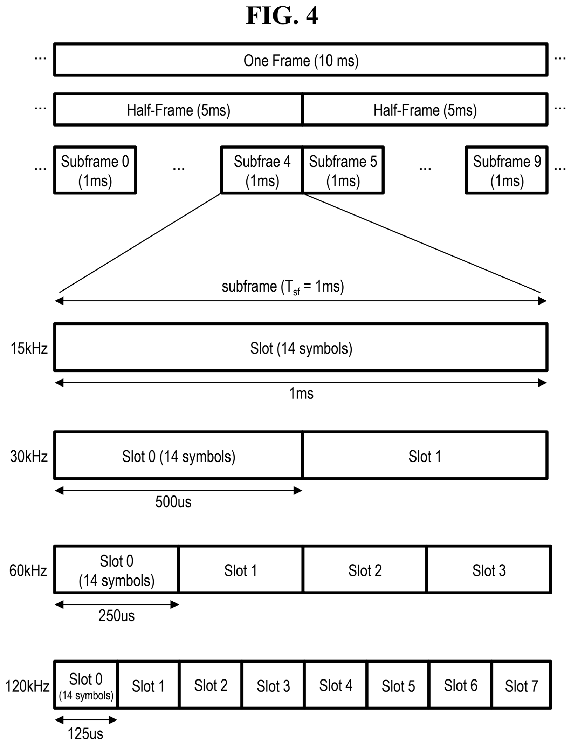

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of $T_f = (\Delta f_{max} * N_f / 100) * T_c = 10$ ms and is divided into two half-frames of 5 ms each. A basic time unit for NR is $T_c = 1/(\Delta f_{max} * N_f)$ where $\Delta f_{max} = 480 * 10^3$ Hz and $N_f = 4096$. For reference, a basic time unit for LTE is $T_s = 1/(\Delta f_{ref} * N_{f,ref})$ where $\Delta f_{ref} = 15 * 10^3$ Hz and $N_{f,ref} = 2048$. $T_s$ and $T_c$ have the relationship of a constant $\kappa = T_s / T_c = 64$. Each half-frame includes 5 subframes and a duration $T_{sf}$ of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing $\Delta f = 2^u*15$ kHz. The table below shows the number of OFDM symbols ( $N^{slot}_{symb}$ ) per slot, the number of slots ( $N^{frame,u}_{slot}$ ) per frame, and the number of slots ( $N^{subframe,u}_{slot}$ ) per subframe.

Table 1

| $u$ | $N^{slot}_{symb}$ | $N^{frame,u}_{slot}$ | $N^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing $\Delta f = 2^u*15$ kHz.

Table 2

| u | $N^{slot}_{symb}$ | $N^{frame,u}_{slot}$ | $N^{subframe,u}_{slot}$ |
|---|---|---|---|
| 2 | 12 | 40 | 4 |

For a subcarrier spacing configuration u, slots may be indexed within a subframe in ascending order as follows: $n^u_s \in \{0, ..., n^{subframe,u}_{slot} - 1\}$ and indexed within a frame in ascending order as follows: $n^u_{s,f} \in \{0, ..., n^{frame,u}_{slot} - 1\}$.

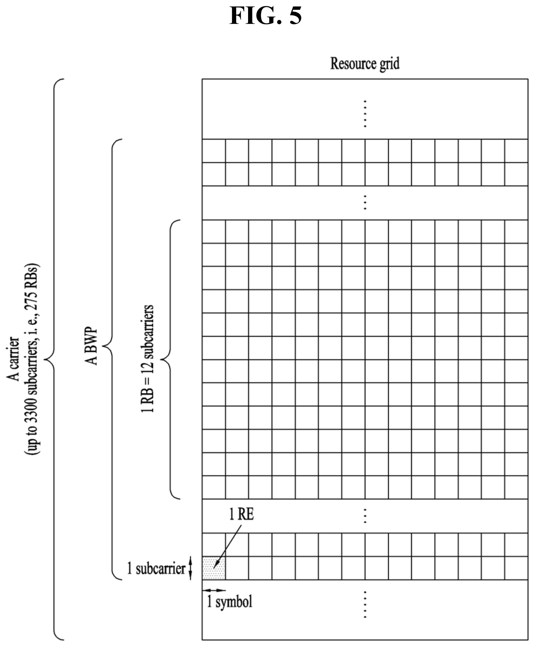

FIG. 5 illustrates a resource grid of a slot. The slot includes multiple (e.g., 14 or 12) symbols in the time domain. For each numerology (e.g., subcarrier spacing) and carrier, a resource grid of $N^{size,u}_{grid,x}*N^{RB}_{sc}$ subcarriers and $N^{subframe,u}_{symb}$ OFDM symbols is defined, starting at a common resource block (CRB) $N^{start,u}_{grid}$ indicated by higher layer signaling (e.g. RRC signaling), where $N^{size,u}_{grid,x}$ is the number of resource blocks (RBs) in the resource grid and the subscript x is DL for downlink and UL for uplink. $N^{RB}_{sc}$ is the number of subcarriers per RB. In the 3GPP-based wireless communication system, $N^{RB}_{sc}$ is typically 12. There is one resource grid for a given antenna port *p*, a subcarrier spacing configuration *u,* and a transmission link (DL or UL). The carrier bandwidth $N^{size,u}_{grid}$ for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u*. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to $N^{size,u}_{BWP,i}-1$, where i is a number of the BWP. The relation between a PRB $n_{PRB}$ in a BWP i and a CRB $n^u_{CRB}$ is given by: $n^u_{PRB} = n^u_{CRB} + N^{size,u}_{BWP,i}$, where $N^{size}_{BWP,i}$ is a CRB in which the BWP starts relative to CRB 0. The BWP includes a plurality of consecutive RBs in the frequency domain. For example, the BWP may be a subset of contiguous CRBs defined for a given numerology $u_i$ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB $N^{start}_{BWP} = O_{carrier} + RB_{start}$ and the number of contiguous RBs $N^{size}_{BWP} = L_{RB}$ provided by an RRC parameter *locationAndBandwidth,* which indicates an offset $RB_{set}$ and a length $L_{RB}$ as a resource indicator value (RIV) on the assumption of $N^{start}_{BWP} = 275$, and a value $O_{carrier}$ provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to $N^{size,u}_{BWP,i}-1$, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

Table 3

| Frequency Range designation | Corresponding frequency range | Subcarrier Spacing |
|---|---|---|
| FR1 | 410MHz-7125MHz | 15,30, 60kHz |
| FR2 | 24250MHz - 52600MHz | 60, 120, 240kHz |

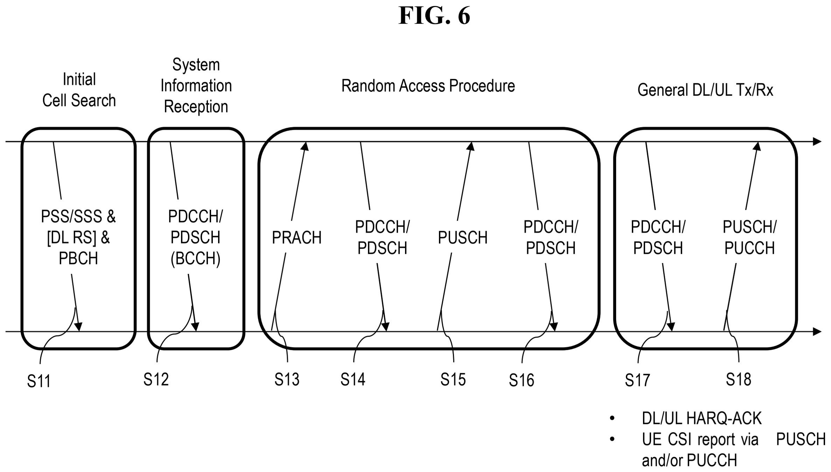

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/-PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer DL channel for DL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using a configured grant (CG) for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

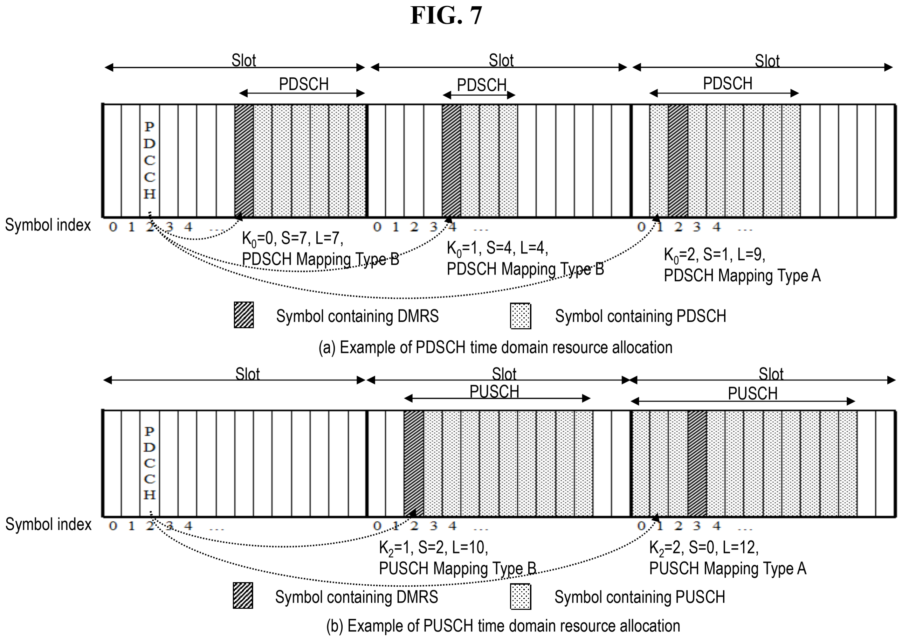

FIG. 7 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index $m+1$ to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset $K_0$, a start and length indicator *SLIV* (or directly, a start position (e.g., start symbol index $S$) and an allocation length (e.g., the number of symbols, $L$) of the PDSCH in a slot), and a PDSCH mapping type. In PUSCH time domain resource configurations, each indexed row defines a UL grant-to-PUSCH slot offset $K_2$, a start position (e.g., start symbol index $S$) and an allocation length (e.g., the number of symbols, $L$) of the PUSCH in a slot, and a PUSCH mapping type. $K_0$ for the PDSCH and $K_2$ for the PUSCH indicate the difference between the slot with the PDCCH and the slot with the PDSCH or PUSCH corresponding to the PDCCH. *SLIV* denotes a joint indicator of the start symbol $S$ relative to the start of the slot with the PDSCH or PUSCH and the number of consecutive symbols, $L$, counting from the symbol $S$. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to an HARQ-ACK codebook. In particular, a bit sequence in which HARQ-ACK information bits are arranged according to a predetermined rule is called an HARQ-ACK codebook.

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

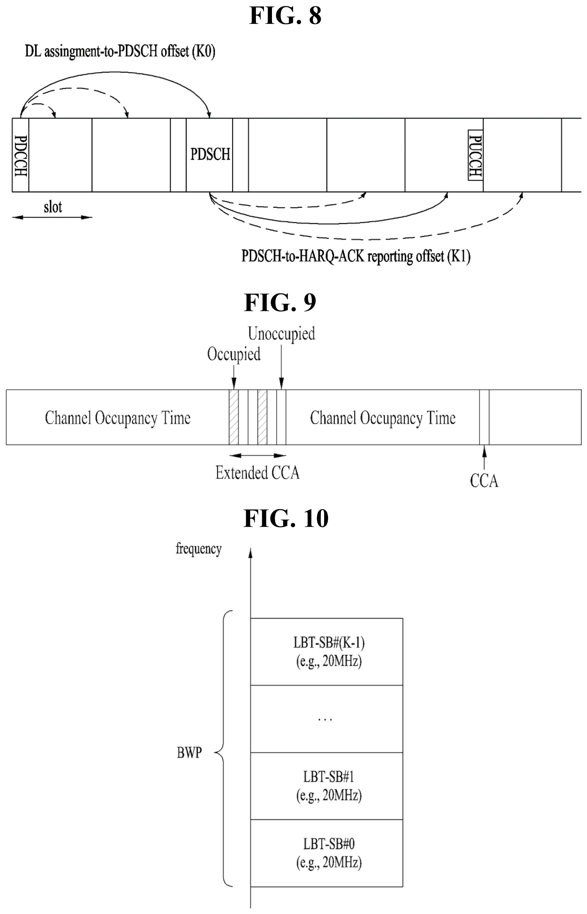

FIG. 8 illustrates an HARQ-ACK transmission/reception procedure.

Referring to FIG. 8, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes an HARQ-ACK response for the PDSCH.

The DCI (e.g., DCI format 1_0 or DCI format 1_1) carried by the PDCCH for scheduling the PDSCH may include the following information.

- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.

- PDSCH-to-HARQ_feedback timing indicator: This indicator indicates K1.

If the PDSCH is configured to transmit a maximum of one TB, an HARQ-ACK response may consist of one bit. If the PDSCH is configured to transmit a maximum of 2 TBs, the HARQ-ACK response may consist of 2 bits when spatial bundling is not configured and one bit when spatial bundling is configured. When an HARQ-ACK transmission timing for a plurality of PDSCHs is designated as slot n+K1, UCI transmitted in slot n+K1 includes an HARQ-ACK response for the plural PDSCHs.

In the present disclosure, an HARQ-ACK payload consisting of HARQ-ACK bit(s) for one or plural PDSCHs may be referred to as an HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to an HARQ-ACK payload determination scheme.

In the case of the semi-static HARQ-ACK codebook, parameters related to an HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, $k \in \{1, 2, 3, 4, 5, 6, 7, 8\}$. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when $k \in \{1, 2, 3, 4, 5, 6, 7, 8\}$, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with an HARQ-ACK codebook or an HARQ-ACK payload. A slot may be understood/replaced as/with a candidate occasion for DL data reception. As described in the example, the bundling window may be determined based on the PDSCH-to-HARQ-ACK timing based on an HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in an HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of an HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### Shared spectrum channel access

A wireless communication system according to some implementations of the present disclosure may support an unlicensed band. For example, some implementations of the present disclosure may be applied to a wireless communication system based on NR unlicensed spectrum (NR-U). In the present disclosure, an unlicensed spectrum is also referred to as a shared spectrum.

Hereinafter, a cell operating in a licensed band (hereinafter, L-band) is referred to as an LCell, and a carrier of the LCell is referred to as a (DL/UL) LCC. Also, a cell operating in an unlicensed band (hereinafter, U-band) is referred to as a UCell, and a carrier of the UCell is referred to as a (DL/UL) UCC. The carrier or carrier frequency of the cell may represent an operating frequency (e.g., center frequency) of the cell. Hereinafter, a cell and a carrier (e.g., CC) may be collectively referred to as a cell.

In some scenarios, when the UE and the BS transmit/receive a signal through a carrier aggregated LCC and UCC , the LCC may be configured as a primary CC (PCC) and the UCC may be configured as secondary CC (SCC). In some scenarios, the UE and the BS may transmit/receive a signal through one UCC or a plurality of carrier-aggregated UCCs. That is, in some scenarios, the UE and the BS may transmit/receive a signal through only UCC(s) without the LCC.

Hereinafter, in some scenarios of the present disclosure, a signal transmission/reception operation in a U-band may be performed based on all the deployment scenarios described above (unless otherwise stated).

Unless otherwise stated, the definitions below may be applied to terms used in the present disclosure.

- Channel: Consists of contiguous resource blocks (RBs) in which a channel access procedure is performed on a shared spectrum, and may refer to a carrier or a part of a carrier.
- Channel access procedure (CAP): Represents a procedure of evaluating channel availability based on sensing in order for a transmission device to determine whether the channel is being used by another communication node(s) before signal transmission. A basic unit for sensing is a sensing slot of a duration Tsl=9 us. When the BS or UE senses the channel for the sensing slot duration, and the power detected for, for example, at least 4 us within the sensing slot duration is less than an energy detection threshold XThresh, the sensing slot duration Tsl may be considered to be in an idle state. Otherwise, for example, the sensing slot duration Tsl=9 us may be considered to be a busy state. The CAP may be referred to as Listen-Before-Talk (LBT).
- Channel occupancy: Refers to transmission(s) by the BS/UE on the channel(s) after the channel access procedure.
- Channel occupancy time (COT): May refer to the total time for which the BS/UE and any BS/UE(s) sharing the channel occupancy may perform transmission(s) on the channel after the channel access procedure. In determining the COT, when the transmission gap is 25 us or less, the gap period may also be counted in the COT. The COT may be shared for transmission between the BS and the corresponding UE(s).
- DL transmission burst: Defined as a set of transmissions from the BS, with no gaps exceeding 16 us. Transmissions from the BS, separated by a gap exceeding 16 us, may be considered as separate DL transmission bursts. The BS may perform transmission(s) after the gap without sensing channel availability within the DL transmission burst.
- UL transmission burst: Defined as a set of transmissions from the UE, with no gaps exceeding 16 us. Transmissions from the UE, separated by a gap exceeding 16 us, may be considered as separate UL transmission bursts. The UE may perform transmission(s) after the gap without sensing channel availability within the UL transmission burst.
- Discovery burst: Refers to a DL transmission burst including a set of signal(s) and/or channel(s), defined within a (time) window and associated with a duty cycle. In an LTE-based system, the discovery burst may include a PSS, an SSS, and a cell-specific RS (CRS) as transmission(s) initiated by the BS, and may further include a non-zero power CSI-RS. In an NR-based system, a discovery burst, which is transmission(s) initiated by a BS, includes at least an SS/PBCH block, and may further include a CORESET for a PDCCH which schedules a PDSCH carrying system information block 1 (SIB1) that includes information related to evaluating whether a UE is allowed to access a cell and defines scheduling of other system information, the PDSCH carrying SIB1, and/or a non-zero power CSI-RS.

FIG. 91 illustrates a method of occupying a resource in an unlicensed band.

Referring to FIG. 9, a communication node (e.g., BS, UE) in a U-band should determine whether a channel is used by other communication node(s) before signal transmission. To this end, the communication node in the U-band may perform the CAP to access the channel(s) on which transmission(s) is performed. The CAP may be performed based on sensing. For example, the communication node may first perform carrier sensing (CS) before transmitting a signal to determine whether other communication node(s) are transmitting a signal. For example, the communication node may apply Listen-Before-Talk (LBT) before performing transmission in the cell to which a shared spectrum channel is connected. When the LBT is applied, the transmission device listens to/senses a channel to determine whether the channel is free or busy, and performs transmission only when the channel is sensed to be free. When it is determined that other communication node(s) are not transmitting a signal, for example, when the channel is sensed to be free, it is defined that clear channel assessment (CCA) is confirmed. When there is a CCA threshold (e.g., XThresh) that is pre-defined or configured by a higher layer (e.g., RRC), the communication node may determine that the channel is busy when energy higher than the CCA threshold is detected on the channel. Otherwise, it may determine that the channel is idle. When it is determined that the channel is idle, the communication node may start signal transmission in the U-band. In the present disclosure, the term CAP may be replaced with LBT, LBT CAP, or LBT/CAP.

In some implementations of the present disclosure, the frame type 3 of LTE or the NR frame structure (see FIG. 5) may be used for operation in the U-band. The configuration of OFDM symbols occupied for uplink/downlink signal transmission in the frame structure for the U-band may be provided by the BS. Here, the OFDM symbol may be replaced with an SC-FDM(A) symbol. In some implementations of the present disclosure, for downlink signal transmission through the U-band, the BS may inform the UE of the configuration of OFDM symbols used in subframe #n by signaling. Here, the terms subframe may be replaced by a slot or a time unit (TU). For example, in an LTE system supporting the U-band, the UE may assume (or identify) the configuration of an occupied OFDM symbol in subframe #n based on a specific field (e.g., a subframe configuration for LAA field, etc.) in the DCI received from the BS in subframe #n-1 or subframe #n.

In some implementations of the present disclosure, for uplink signal transmission through the U-band, the BS may provide information about an uplink transmission duration to the UE through signaling. For example, in an LTE system supporting the U-band, the UE may acquire the information of "UL duration" and "UL offset" for subframe #n through a "UL duration and offset" field in the detected DCI. For example, when the "UL duration and offset" field sets (or indicates) UL offset 1 and UL duration d for subframe #n, the UE may not need to receive a downlink physical channel and/or a physical signal in subframe #n+1+i (where i=0, 1,..., d-1).

FIG. 10 illustrates a bandwidth part (BWP) including a plurality of LBT-SBs in an unlicensed band.

A cell (or carrier (e.g., CC)) or BWP configured for the UE in a wireless communication system supporting the U-band may be configured with a wideband having a larger bandwidth (BW) than that of conventional LTE, However, the BW requiring CCA based on the independent LBT operation may be limited based on regulation, etc. When a subband (SB) in which individual LBT is performed is referred to as an LBT-SB, a plurality of LBT-SBs may be included in a wideband cell/BWP. In some implementations of the present disclosure, an RB set constituting an LBT-SB may be configured through higher layer (e.g., RRC) signaling. Accordingly, based on (i) the BW of a cell/BWP and (ii) the RB set allocation information, one or more LBT-SBs may be included in a cell/BWP.

Referring to FIG. 10, a plurality of LBT-SBs may be included in the BWP of a cell (or carrier). An LBT-SB may have, for example, a 20 MHz band. The LBT-SB may be composed of a plurality of contiguous (P)RBs in the frequency domain, and may be referred to as a (P)RB set. Although not shown, a guard band (GB) may be included between the LBT-SBs. For example, referring to FIG. 10, the BWP may be configured in the form of {LBT-SB #0 (RB set #0) + GB #0 + LBT-SB #1 (RB set #1 + GB #1) +... + LBT-SB #(K-1) (RB set (#K-1))}. The LBT-SB/RB index may be configured/defined to start from a low frequency band and increase toward a high frequency band.

In some implementations of the present disclosure, the BS may perform one of the following CAPs for downlink signal transmission in the U-band.

(1) Type 1 downlink (DL) CAP

In Type 1 DL CAP, the length of the time duration spanned by the sensing slot that is sensed to be idle before transmission(s) is random. Type 1 DL CAP may be applied to the following transmission:

- Transmission(s) initiated by BS, including (i) a unicast PDSCH with user plane data, or (ii) a unicast PDSCH with user plane data and a unicast PDCCH for scheduling the user plane data; or
- Transmission(s) initiated by the BS and having either (i) a discovery burst only or (ii) a discovery burst multiplexed with non-unicast information.

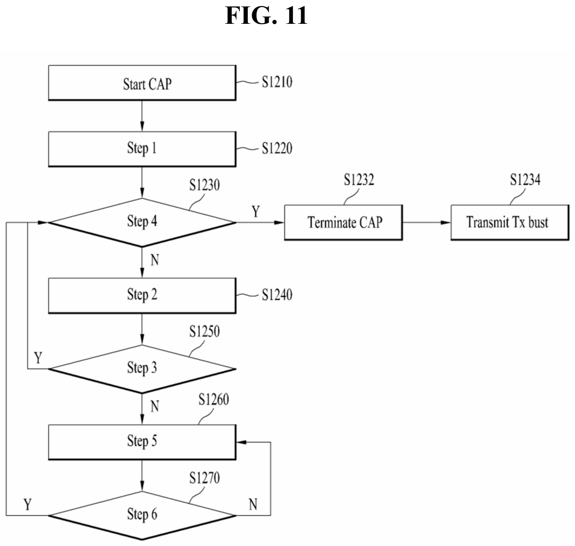

FIG. 11 illustrates a flow of a CAP operation of a BS for downlink signal transmission by the BS through an unlicensed band.

Referring to FIG. 11, the BS may first sense whether the channel is idle for the sensing slot duration of a defer duration $T_d$, and may then perform transmission when the counter N reaches 0 (S1234). Here, the counter N is adjusted by sensing the channel for additional sensing slot duration(s) according to the following procedure:

Step 1) Set N=$N_{init}$ (S1220), where $N_{init}$ is a random value uniformly distributed between 0 and $CW_p$. Then, go to step 4;
Step 2) When N>0 and the BS chooses to decrement the counter, set N=N-1 (S1240);
Step 3) Sense the channel for the additional sensing slot duration. If the additional sensing slot duration is idle (Y in S1250), go to step 4. Otherwise (N in S1250), go to step 5;
Step 4) If N=0 (Y in S1230), terminate the CAP (S1232). Otherwise (N in S1230), go to step 2;
Step 5) Sense the channel until a busy sensing slot is detected within the additional defer duration $T_d$ or all sensing slots within the additional defer duration $T_d$ are detected to be idle (S1260); and
Step 6) If the channel is sensed to be idle for all the sensing slot durations of the additional defer duration $T_d$ (Y in S1270), go to step 4. Otherwise (N in S1270), go to step 5.

The following table shows that $m_p$, the minimum contention window (CW), the maximum CW, the maximum channel occupancy time (MCOT), and the allowed CW sizes applied to the DL CAP vary according to a channel access priority class.

Table 4

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

The defer duration $T_d$ is configured in the form of duration $T_f$ (16 us) + $m_p$ consecutive sensing slot durations $T_{sl}$ (9 us). $T_f$ includes the sensing slot duration $T_{sl}$ at the start of the 16 us duration.

$CW_{min,p}$ <= $CW_p$ <= $CW_{max,p}$. $CW_p$ may be configured as $CW_p$ = $CW_{min,p}$, and may be updated before step 1 based on HARQ-ACK feedback (e.g., the ratio of ACK or NACK) to the previous DL burst (e.g., PDSCH) (CW size update). For example, $CW_p$ may be initialized to $CW_{min,p}$ based on the HARQ-ACK feedback to the previous DL burst, may be increased to the next high allowed value, or maintain the existing value.

(2) Type 2 DL CAP

In Type 2 DL CAP, the length of the time duration spanned by the sensing slot that is sensed to be idle before transmission(s) is deterministic. Type 2 DL CAP is classified into Type 2A/2B/2C DL CAPs.
Type 2A DL CAP may be applied to the following transmission. In Type 2A DL CAP, the BS may perform transmission immediately after the channel is sensed to be idle for at least the sensing duration $T_{short\_dl}$=25 us. Here, $T_{short\_dl}$ is composed of a duration $T_f$ (=16 us) immediately followed by one sensing slot duration. $T_f$ includes a sensing slot at the start of the duration.

- Transmission(s) initiated by the BS and having either (i) a discovery burst only or (ii) a discovery burst multiplexed with non-unicast information; or
- Transmission(s) of the BS after a 25 us gap from transmission(s) by UE within shared channel occupancy.

Type 2B DL CAP is applicable to transmission(s) performed by the BS after a 16us gap from the transmission(s) by the UE within the shared channel occupancy time. In Type 2B DL CAP, the BS may perform transmission immediately after the channel is sensed to be idle for $T_f$-16 us. $T_f$ includes a sensing slot within the last 9 us of the duration. Type 2C DL CAP is applicable to transmission(s) performed by the BS after a gap of up to 16 us from the transmission(s) by the UE within the shared channel occupancy time. In Type 2C DL CAP, the BS does not sense the channel before performing transmission.

(3) Third downlink CAP

The BS may perform the following CAP for DL signal transmission through multiple carriers in the U-band.

1) Type A: The BS performs the CAP on multiple carriers based on a counter N defined for each carrier (counter N considered in the CAP), and performs DL signal transmission based thereon.

- Type A1: The counter N for each carrier is determined independently, and DL signal transmission through each carrier is performed based on the counter N for each carrier.
- Type A2: The counter N for each carrier is determined as a value of N for a carrier having the largest CW size, and DL signal transmission through the carrier is performed based on the counter N for each carrier.

2) Type B: The BS performs the CAP based on the counter N only for a specific carrier among a plurality of carriers, and determines whether the channel is idle for the remaining carriers prior to signal transmission on the specific carrier to perform DL signal transmission.

- Type B1: A single CW size is defined for a plurality of carriers, and the BS utilizes the single CW size in performing the CAP based on the counter N for a specific carrier.
- Type B2: A CW size is defined for each carrier, and the largest CW size among the CW sizes is utilized in determining the value $N_{init}$ for a specific carrier.

In some implementations of the present disclosure, the UE may perform Type 1 or Type 2 CAP for UL signal transmission in the U-band. In general, the UE may perform a CAP (e.g., type 1 or type 2) configured by the BS for UL signal transmission. For example, the UE may include CAP type indication information in a UL grant (e.g., DCI format 0_0, 0_1, or 0_2) for scheduling PUSCH transmission.

(1) Type 1 UL CAP

In Type 1 UL CAP, the length of the time duration spanned by the sensing slot that is sensed to be idle before transmission(s) is random. Type 1 UL CAP may be applied to the following transmission:

- PUSCH/SRS transmission(s) scheduled and/or configured by the BS;
- PUCCH transmission(s) scheduled and/or configured by the BS; or
- Transmission(s) related to a random access procedure.

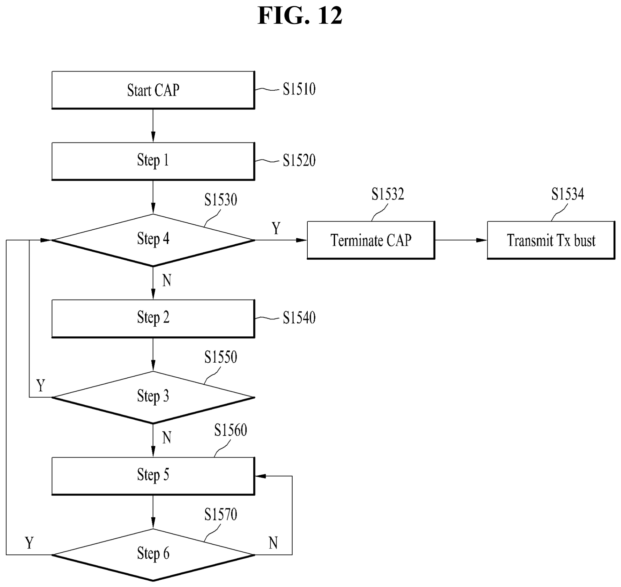

FIG. 12 illustrates a flow of a Type 1 CAP operation of a UE for uplink signal transmission.
Referring to FIG. 12, the UE may first sense whether the channel is idle for the sensing slot duration of a defer duration $T_d$, and may then perform transmission when the counter N reaches 0 (S1534). Here, the counter N is adjusted by sensing the channel for additional sensing slot duration(s) according to the following procedure:

Step 1) Set $N=N_{init}$ (S1520), where $N_{init}$ is a random value uniformly distributed between 0 and $CW_p$. Then, go to step 4;
Step 2) When N>0 and the UE chooses to decrement the counter, set N=N-1 (S1540);
Step 3) Sense the channel for the additional sensing slot duration (S1550). If the additional sensing slot duration is idle (Y in S1550), go to step 4. Otherwise (N in S1550), go to step 5;
Step 4) If N=0 (Y in S1530), terminate the CAP (S1532). Otherwise (N in S1530), go to step 2;
Step 5) Sense the channel until a busy sensing slot is detected within the additional defer duration $T_d$ or all sensing slots within the additional defer duration $T_d$ are detected to be idle (S1560); and
Step 6) If the channel is sensed to be idle for all the sensing slot durations of the additional defer duration $T_d$ (Y in S1570), go to step 4. Otherwise (N in S1570), go to step 5.

The following table shows that $m_p$, the minimum CW, the maximum CW, the MCOT, and the allowed CW sizes applied to the UL CAP vary according to a channel access priority class.

Table 5

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

The defer duration $T_d$ is configured in the form of duration $T_f$ (16 us) + $m_p$ consecutive sensing slot durations $T_{sl}$ (9 us). $T_f$ includes the sensing slot duration $T_{sl}$ at the start of the 16 us duration.

$CW_{min,p} <= CW_p <= CW_{max,p}$. $CW_p$ may be configured as $CW_p = CW_{min,p}$, and may be updated before step 1 based on an explicit/implicit reception response to the previous UL burst (e.g., PUSCH) (CW size update). For example, $CW_p$ may be initialized to $CW_{min,p}$ based on an explicit/implicit reception response to the previous UL burst, may be increased to the next high allowed value, or maintain the existing value.

(2) Type 2 UL CAP

In Type 2 UL CAP, the length of the time duration spanned by the sensing slot that is sensed to be idle before transmission(s) is deterministic. Type 2 UL CAP is classified into Type 2A/2B/2C UL CAPs. In Type 2A UL CAP, the UE may perform transmission immediately after the channel is sensed to be idle for at least the sensing duration $T_{short\_dl}$=25 us. Here, $T_{short\_dl}$ is composed of a duration $T_f$ (=16 us) immediately followed by one sensing slot duration. In Type 2A UL CAP, $T_f$ includes a sensing slot at the start of the duration. In Type 2B UL CAP, the UE may perform transmission immediately after the channel is sensed to be idle for the sensing duration $T_f$=16 us. In Type 2B UL CAP, $T_f$ includes a sensing slot within the last 9 us of the duration. In Type 2C UL CAP, the UE does not sense the channel before performing transmission.

**UE discontinuous reception (DRX)**

To reduce power consumption, the UE uses DRX. The UE operating based on DRX repeatedly turns its reception operation on and off. The characteristics of DRX, which is used to reduce unnecessary power consumption of the UE, are as follows. For DRX, there are separate defined structures: a structure (hereinafter, referred to as I-DRX) for a UE in an RRC_IDLE state where an RRC connection has not been set up between the UE and the BS, and a structure (hereinafter, referred to as C-DRX) for a UE in an RRC_CONNECTED state where an RRC connection has been set up between the UE and the BS. Both DRX structures are designed to define a periodical interval where the UE may expect to receive DL signals (e.g., an active time or on-duration period), so that unnecessary power consumption is reduced in the other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

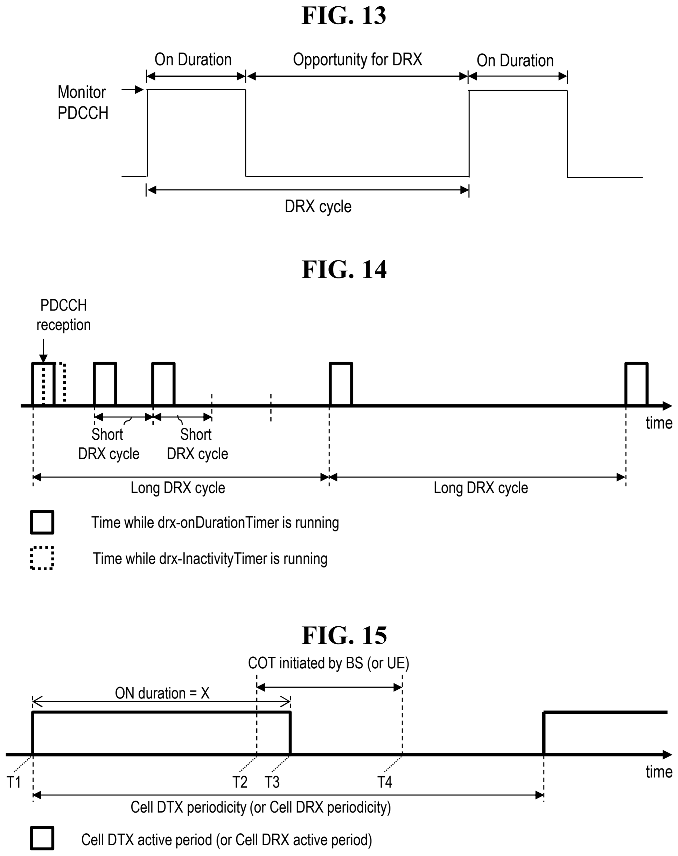

FIG. 13 illustrates a discontinuous reception (DRX) operation. Specifically, FIG. 13 shows a DRX cycle for a UE in the RRC CONNECTED state.

Referring to FIG. 13, a DRX cycle includes an On Duration and an Opportunity for DRX. The DRX cycle defines a time interval between periodic repetitions of the On Duration followed by an inactivity possible period. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 13.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 13.

Table 6

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |

(continued)

| | Type of signals | UE procedure |
|---|---|---|
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. The active time here refers to a total duration during which the UE monitors the PDCCH. The active time may include the ON duration of a DRX cycle, the time when the UE performs continuous reception while the inactivity timer has not expired, and the time when the UE performs continuous reception while waiting for a retransmission opportunity. For example, when DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

The UE may be configured with one or multiple DRX groups through RRC signaling from the BS. For example, if two DRX groups are configured, each serving cell is uniquely assigned to one of the two DRX groups. The DRX parameters: drx-onDurationTimer and drx-InactivityTimer are configured separately for each DRX group. The DRX parameters: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL are common to the DRX groups. Since each serving cell belongs to only one of the DRX groups, and the DRX parameters drx-onDurationTimer and drx-InactivityTimer are configured for each DRX group, while the other DRX parameters are common to the DRX groups, it may be considered that the serving cell is associated with only one set of DRX parameters.

The UE performs PDCCH monitoring during a periodic ON duration to identify any UL or DL transmissions/receptions to be performed. Upon receipt of a PDCCH, the UE performs a DL reception or a UL transmission according to an indication of the PDCCH. For UL, in the presence of data to be transmitted in a UL buffer, the UE may wake up and transmit a scheduling request (SR) regardless of C-DRX, even if the UE is in sleep mode. A UE in idle mode periodically performs paging monitoring. When the UE is not a target of the paging, it may re-enter the sleep mode and operate in the idle mode (idle mode DRX (i.e., I-DRX)). When it is said that the UE operates in the sleep mode, this may mean that the UE performs an SR transmission "regardless of an active time determined by C-DRX" or "even during periods other than the active time determined by C-DRX." In the C-DRX operation, a DRX cycle is a repeating time period including an ON duration and an OFF duration. The length of a DRX cycle may be defined from the start of an ON duration until just before the next one. DRX cycles may be categorized into a long DRX cycle and a short DRX cycle. When the DRX cycle length increases, latency may increase because when the BS has a PDSCH to be transmitted to the UE immediately after a specific ON duration of the UE ends, the BS should wait until the next ON duration of the UE. From the perspective of the BS, since the UE does not transmit periodic CSI (P-CSI) or a sounding reference signal (SRS) during the OFF period, the BS may allocate those resources (i.e., resources for the P-CSI or SRS transmission) to other UEs, thereby increasing resource utilization. The BS may also switch to power saving mode during the OFF period of the UE to save energy.

FIG. 14 illustrates a case in which a long DRX cycle and a short DRX cycle are configured. Specifically, FIG. 14 shows a case in which *drx-ShortCycleTimer* is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. The same *onDurationTimer* value may be configured for the long DRX cycle and the short DRX cycle. If there is no data activity (e.g., no PDCCH is received) during the ON duration of the long DRX cycle, the UE follows the long DRX cycle as if the short DRX cycle were not configured. If there is data activity during the on-duration of the long DRX cycle, for example, while *drx-onDurationTimer* is running, the UE switches to the short DRX cycle and follows the short DRX cycle for a certain period of time (e.g., while *drx-ShortCycleTimer* is running). In this case, the start of the ON duration in the short DRX cycle is determined by *drx-StartOffset* and *drx-SlotOffset,* just like in the long DRX cycle. Referring to FIG. 14, if there is no data activity during the time that the UE follows the short DRX cycle, for example, if there is no data activity during the period defined by *drx-ShortCycleTimer* *drx-ShortCycle, the UE switches from short DRX cycles each having the duration by *drx-ShortCycleTimer* to the long DRX cycle.

The BS may indicate the UE to immediately enter DRX sleep mode without operating in active mode until the end of the ON duration by a DRX command MAC control element (CE). For example, the BS may indicate the UE to end its current active time and immediately enter the DRX cycle. When the UE is configured only with the long DRX cycle, it may operate in the long DRX cycle (based on the DRX command MAC CE). When both long and short DRX cycles are configured for the UE, the UE immediately enters the short DRX cycle after receiving the DRX command MAC CE. Further, when the BS provides a long DRX command MAC CE, the UE may operate in the long DRX cycle even if the short DRX cycle is configured.

The BS may also adjust/change the start point of the long DRX cycle by an RRC parameter *drx-LongCycleStartOffset* used to configure the long DRX cycle and *drx-SlotOffset* that defines a subframe where the long and short DRX cycles start. The value of the RRC parameter *drx-LongCycleStartOffset* is defined in ms, so that the long DRX cycle may start at a slot boundary. Additionally, another RRC parameter *drx-SlotOffset* may be used to configure the start point of an ON duration with a slot-level granularity. In this case, it is defined as a relative position of the ON duration by applying a slot offset indicated (by *drx-SlotOffset)* to a reference point indicated by *drx-LongCycleStartOffset.*

The UE may save energy by waking up only during the ON duration to monitor a PDCCH transmitted to it according to a C-DRX configuration, compared to continuously monitoring a PDCCH (e.g., in every slot). Further, when the BS has no data to transmit to the UE during an upcoming ON duration of the UE, the BS may save even more of the battery of the UE by transmitting a wake-up signal (WUS) and thus indicating no need to wake up in the ON duration (i.e., no need to start an onDurationTimer), before the ON duration of the UE starts. In this context, when the BS has no data to transmit/receive to/from a UE with a C-DRX configuration during an upcoming ON duration of the UE, the BS may indicate to the UE that the UE does not need to wake up in this On duration by transmitting a WUS transmittable in DCI format 2_6, which is used to notify one or more UEs of power saving information outside the DRX active time, in a WUS occasion configured before the ON duration. When receiving the WUS (e.g., a wake-up indication via DCI format 2_6), the UE may continue to remain in the sleep state without transitioning to the active mode, thereby saving more energy.

**Network Energy Saving and Cell DRX/DTX**

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

When the BS operates in network energy saving (NES) mode for energy saving (ES), it means that the BS has preconfigured a plurality of OFF periods (e.g., discontinuous transmission (DTX) periods of the BS) during which it turns off transmissions of a specific DL signal, and dynamically indicates one of these OFF periods to indicate that the DL signal is not transmitted during the predefined time period and thus reduce the power consumption of the BS and the UE. The NES mode may refer to an operation mode in which the power consumption of the BS and the UE is reduced by performing operations in the frequency domain, such as BWP switching and dynamic resource block (RB) adaptation, and operations in the spatial domain, such as semi-statically or dynamically turning off a specific BS reception antenna port to stop transmission and/or reception through it, as well as operations in the time domain.

In the following description, UE DRX, or C-DRX and I-DRX refers to discontinuous reception from the perspective of the UE. Cell DRX refers to discontinuous reception from perspective of the BS, while cell DTX refers to discontinuous transmission from the perspective of the BS. From the perspective of the UE, cell DRX may mean turning off UL transmission, and cell DTX may mean turning off DL reception.

To reduce an active time for DL transmission/UL reception of the BS, the UE may be configured with a periodic cell DTX/DRX pattern (i.e., active and non-active periods). The cell DTX/DRX pattern may be common to all UEs within the cell. Each serving cell may be configured with a periodic cell DTX pattern by RRC. The BS may configure only cell DTX, only cell DRX, or both for a cell. Cell DTX and cell DRX patterns may be configured and activated separately. A maximum of N cell DTX/DRX patterns per MAC entity may be configured for different serving cells, where N is a predefined value. Cell DTX/DRX may be activated/deactivated by RRC signaling or L1 group common signaling (e.g., signaling via a group-common PDCCH.

The BS may control cell DTX and cell DRX operations by providing a cell DTX/DRX configuration through RRC signaling. For example, through the cell DTX/DRX configuration, the BS may provide RRC parameters for a timer (e.g., a cell DTX/DRX ON duration timer) related to an active period at the start of a cell DTX/DRX cycle, a subframe where the cycle starts, a delay before the active period starts, and a cell DTX/DRX cycle period (i.e., a cell DTX/DRX periodicity). For example, the following cell DTX/DRX-related parameters may be used in a cell DTX/DRX configuration.

Table 7

```
CellDTXDRX-Config-r18 ::=          SEQUENCE {
  cellDTXDRX-onDurationTimer-r18        CHOICE {
      subMilliSeconds INTEGER (1..31),
      milliSeconds   ENUMERATED {
       ms1, ms2, ms3, ms4, ms5, ms6, ms8, ms10, ms20, ms30, ms40, ms50, ms60,
       ms80, ms100, ms200, ms300, ms400, ms500, ms600, ms800, ms1000, ms1200,
       ms1600, spare8, spare7, spare6, spare5, spare4, spare3, spare2, spare1 }
    }                              OPTIONAL,  -- Need M
  cellDTXDRX-CycleStartOffset-r18       CHOICE {
      ms10               INTEGER(0..9),
      ms20               INTEGER(0..19),
      ms32               INTEGER(0..31),
      ms40               INTEGER(0..39),
      ms60               INTEGER(0..59),
      ms64               INTEGER(0..63),
      ms70               INTEGER(0..69),
      ms80               INTEGER(0..79),
      ms128               INTEGER(0..127),
      ms160               INTEGER(0..159),
      ms256               INTEGER(0..255),
      ms320               INTEGER(0..319),
      ms512               INTEGER(0..511),
      ms640               INTEGER(0..639),
      ms1024               INTEGER(0..1023),
      ms1280               INTEGER(0..1279),
      ms2048               INTEGER(0..2047),
      ms2560               INTEGER(0..2559),
      ms5120               INTEGER(0..5119),
      ms10240               INTEGER(0..10239)
    }                              OPTIONAL,  -- Need M
  cellDTXDRX-SlotOffset-r18     INTEGER (0..31)           OPTIONAL,  -- Need M
  cellDTXDRXconfigType-r18     ENUMERATED {dtx, drx, dtxdrx}    OPTIONAL,  -- Need M
  cellDTXDRXactivationStatus-r18 ENUMERATED {activated, deactivated}  OPTIONAL  -- Need N
  }
```

The parameters in the above table may have the following meanings.

Table 8

| **CellDTXDRX-Config field descriptions** |
| --- |
| **cellDTXDRX-CycleStartOffset**<br>*cellDTXDRX-Cycle* in ms and *cellDTXDRX-StartOffset* in multiples of 1 ms.<br>The configured *cellDTXDRK-Cycle* is an integer multiple of configured *drx-longCycle* or vice versa. |
| **cellDTXDRX-onDurationTimer**<br>Value in multiples of 1/32 ms (subMilliSeconds) or in ms (milliSecond). For the latter, value *ms1* corresponds to 1 ms, value *ms2* corresponds to 2 ms, and so on. |
| **cellDTXDRX-SlotOffset**<br>Value in 1/32 ms. Value 0 corresponds to 0 ms, value 1 corresponds to 1/32 ms, value 2 corresponds to 2/32 ms, and so on. |
| **cellDTXDRXactivationStatus**<br>Initial activation status of cell DTX/DRX indicating whether the UE shall activate the configuration according to the received parameters. This field is only used upon setup of a cell DTX/DRX configuration. |
| **cellDTXDRXconfigType**<br>Indicates whether the configuration is for cell DTX only, cell DRX only, or joint cell DTX/DRX configuration. |

Among the above parameters, *cellDTXDRX-CycleStartOffset* provides *celldtxdrx-Cycle* regarding the periodicity of a cell DTX/DRX cycle and *celldtxdrx-StartOffset* defining a subframe in which the cell DTX/DRX cycle starts. *celldtxdrx-onDurationTimer* is started on a corresponding serving cell after *celldtxdrx-SlotOffset* from the start of the subframe. That is, an ON duration of the cell DTX/DRX cycle on the serving cell starts after *celldtxdrx-SlotOffset* from the start of the subframe.

An active period in cell DTX/DRX may be a period during which the UE waits to receive PDCCHs or SPS occasions and to transmit an SR or a CG. The cell DTX/DRX cycle specifies a periodic repetition of an active period followed by an inactive period. The active period and cycle parameters may be common between cell DTX and cell DRX. The BS may configure C-DRX and cell DTX/DRX to have at least a partial overlap between a C-DRX ON period of the UE and a cell DTX/DRX active period. For instance, the BS may configure a C-DRX periodicity of the UE to be an integer multiple of a cell DTX/DRX periodicity, or vice versa.

A cell DTX operation affects the monitoring activity of the UE for PDCCHs and configured DL assignments in RRC_CONNECTED. For a serving cell for which cell DTX is configured and activated, the UE (e.g., a MAC entity of the UE) monitors a PDCCH on the serving cell, when the serving cell is in the cell DTX active period. The cell DTX active period of the serving cell may include a time period during which a cell DTX/DRX ON duration timer is running for the serving cell. For example, for the serving cell for which cell DTX is configured and activated, when the serving cell is not in the cell DTX active period, the UE (e.g., the MAC entity of the UE) may not monitor a PDCCH on the serving cell, and may not receive a transport block (i.e., not perform an SPS PDSCH reception) on the serving cell according to a configured DL assignment for SPS, regardless of whether the UE is in a UE C-DRX active period.

A cell DRX operation controls an SR and configured UL grant transmission activity of the UE in RRC_CONNECTED. In some scenarios, when cell DRX is configured and activated for a serving cell, the UE (e.g., the MAC entity of the UE) may, in principle, perform, on the serving cell, a CG PUSCH transmission and a PUCCH transmission (if the serving cell is a PUCCH cell) only in the cell DRX active period. The cell DRX active period of the serving cell may include a time period during which a cell DRX ON duration timer is running for the serving cell. For example, when the serving cell with configured and activated cell DRX is within the cell DRX non-active period, the UE (e.g., the MAC entity of the UE) does not transmit an SR in a PUCCH resource for SR (even if the serving cell is a PUCCH cell), does not report periodic CSI on a PUCCH (even if the serving cell is a PUCCH cell), and does not report semi-persistent CSI configured on a PUSCH of the serving cell. In other words, when cell DRX is configured and activated for a serving cell, the UE may not perform a transmission in CG resources of the serving cell or may not transmit an SR on the serving cell, during the DRX non-active period.

**<Implementation #1> Method for adapting cell DTX/DRX active/inactive time period and/or periodicity and transmission/reception operation according to result of performing LBT at BS or UE**

FIG. 15 is a diagram illustrating a problem encountered when a cell DTX/DRX configuration is applied to an unlicensed band.

To start a DL transmission (or UL transmission) during a cell DTX active period (or cell DRX active period) on a cell configured with cell DTX (or cell DRX), a BS (or a UE) should perform LBT before performing the transmission. Referring to FIG. 15, since the BS (or the UE) is capable of performing a transmission only after successfully performing LBT, even if it attempts the transmission within a cell DTX/DRX active period, a timing at which the DL transmission (or UL transmission) could start may be irregular due to the LBT. Consequently, a time period during which the BS/UE is capable of performing the transmission may be different from an active period determined according to a cell DTX/DRX configuration due to the LBT. This may correspond to a change in the starting time of the cell DTX/DRX active period. Due to the influence of the LBT, for example, a starting time at which the BS/UE may perform the transmission on the cell, that is, an actual starting time of the cell DTX/DRX active period may be changed. Moreover, since the BS/UE is capable of performing the transmission only within a channel occupancy time (COT) initiated by the BS/UE, the (actual) active period may also be different from the cell DTX/DRX active period. Therefore, in some implementations of the present disclosure, the following method(s) of adapting an active/inactive time period (i.e., an ON/OFF period/pattern) configured by a cell DTX/DRX configuration may be applied, taking into account the influence of LBT.

(1) Method for introducing separate signaling (e.g., group-common (GC) DCI or a MAC control element (CE)) that indicates the starting time (+ period or ending time) of an active period (or method for indicating the starting time (+ period or ending time) of a subsequent inactive period, considering that a UE receives this signaling during a cell DTX active period). For example, referring to FIG. 15, the BS may inform the UE of T2 as the start of an actual active period on a corresponding cell via GC DCI or a MAC CE. In some implementations, the BS may inform the UE of an adapted duration of the active period along with an adapted starting time of the active period. For example, referring to FIG. 15, the BS may inform the UE of T2 as the start of the actual active period on the cell, and of a duration of (T4 - T2) as the duration of the actual active period. Alternatively, the BS may inform the UE of T2 as the start of the actual active period on the cell, and of T4 as the ending time of the actual active period. In some implementations, considering that the UE will receive the DCI or the MAC CE during a cell DTX active period, the BS may also inform the UE of the ending time T3 of the actual active period within a corresponding periodicity, that is, the starting time of an actual inactive period (and the duration or ending time of the actual inactive period) via GC DCI or a MAC CE.

(2) Method for, upon detecting/decoding a specific signal/channel (e.g., PDCCH) from the perspective of a UE, recognizing it as the starting time of an active period and performing a transmission/reception operation in the active period starting from the time point. In this case, the following methods may be further considered.

> A. The BS and the UE may perform the transmission/reception operation by recognizing a time duration equal to a duration (i.e., the length of an active time period) configured by a cell DTX configuration from the starting time of a corresponding active period as the active period, or by considering the ending time of the active period to be the same as in an operation in a licensed band, even if its starting time is delayed. For example, referring to FIG. 15, when the start or end of a specific PDCCH detected by the UE (or the start or end of the specific PDCCH transmitted by the BS) is denoted by T2, the UE and the BS may determine a time duration X from T2 as an active period or determine an actual active period to be from T2 to T3, even if the starting time of the active period is delayed from T1 to T2.

> B. Alternatively, the BS and the UE may recognize a COT duration indicated by a specific DCI format (e.g., DCI format 2_0) as an active period, or when a COT duration (for a corresponding cell) is not indicated by the specific DCI format (e.g., DCI format 2_0), the BS and the UE may determine an active period based on DCI transmission/detection. For example, referring to FIG. 15, the UE/BS that detects/transmits a specific DCI format indicating a time period of T2 to T4 as a COT duration may determine the time period of T2 to T4 as an active period. In another example, even if the COT duration for the corresponding cell is not indicated by the detected/transmitted specific DCI format, the UE/BS may operate by considering that a corresponding actual active period starts at the start or end of a PDCCH carrying the specific DCI format within a corresponding periodicity, based on the specific DCI format being detected/transmitted. Alternatively, when detecting/transmitting a PDCCH scheduling a DL transmission within an original cell DTX active period according to the cell DTX configuration, the UE/BS may operate by assuming that the corresponding actual active period starts at the start or end of the PDCCH.

(3) Method for pre-configuring a time window that may be the starting time of an active period (or that may be the active period). For example, the following methods may be considered.

> A. It may be regulated that the starting time of an active period may only exist up to a corresponding time window (e.g., only within the time window). When the active period does not start even after the time window (e.g., when GC DCI or a MAC CE indicating the starting time of the active period is not received within the time window (refer to Method (1)), or when a specific DCI format (or a PDCCH scheduling a DL transmission) is not detected within the time window (refer to Method (2)), the BS and the UE may operate by assuming that there is no ON duration within a corresponding periodicity. For example, when the active period does not start within the configured time window, the BS and the UE may perform a BS/UE operation specified for an inactive period within the corresponding periodicity. The start of the time window within which the active period may start may be configured to be the same as or different from the start of an ON duration based on a cell DTX configuration.

> B. Alternatively, the BS may configure a maximum starting delay d_max instead of a time window, and when an active period does not start even after the maximum starting delay has elapsed (e.g., when GC DCI or a MAC CE indicating the starting time of an actual active period is not received before the maximum starting delay elapses after the start of an original active period according to a cell DTX configuration (refer to Method (1)), or when a specific DCI format (or a PDCCH scheduling a DL transmission) is not detected), the UE and the BS may operate by assuming that there is no ON duration within a corresponding periodicity. In this case, when the time length of one ON duration is N, d_max may be configured to be a value less than or equal to N, or d_max may be fixed to N. Although the time window according to Method (3)-A does not have to start from a starting time indicated in the cell DTX configuration, the maximum starting delay may start from the starting time indicated by the cell DTX configuration.

> C. In some implementations, when an active period starts within a time window, the length of the active period may be configured/indicated by one of {the length of the ON duration in the cell DTX configuration, the end time of the time window}.

In some implementations of Method (1), Method (2), and/or Method (3), a periodicity may be adapted based on the dependency on the starting time of an active period (e.g., an inactive period of a specific duration is always guaranteed after the active period ends) or the starting time of the periodicity may be fixed.

Method (3)-D may include: Alt 1) a method in which the starting time of an active period floats but the ending time of the active period is always fixed (in this case, the same length is always guaranteed for a subsequent inactive period); Alt 2) a method in which if the starting time of an active period floats (i.e., if the starting time of the active period changes), the ending time of the active period also floats (in this case, the same time length is always guaranteed for active periods), and the starting time of an inactive period following the active period also floats, while the ending time of the inactive period is always fixed; or Alt 3) a method in which even the ending time of the very last inactive period floats in Alt 2 above (in this case, the same length is always guaranteed for inactive periods as well).

For convenience, the above methods have been described from the perspective of a method for adapting a cell DTX active/inactive time period and a reception operation of the UE, according to the result of performing LBT by the BS in a cell DTX configuration. However, when the UE performs LBT for a CG PUSCH transmission in a cell DRX active period, they may also be applied to the adaptation of a cell DRX active/inactive time period and a reception operation of the BS by replacing cell DTX with cell DRX, BS transmission with UE transmission, and UE reception with BS reception in the above methods. However, in some implementations, a time window within which an (actual) active period may start by LBT of the UE, and a maximum starting delay within which the (actual) active period may start by LBT of the UE may be configured for the UE by the BS.

**<Implementation #2> Relationship with cell DTX/DRX configuration and transmission/reception operation method, when BS or UE operates in frame based equipment (FBE) mode in unlicensed band**

The FBE mode will be briefly described below, and some implementations of the present disclosure related to a cell DTX/DRX configuration will be described. For more details of the FBE mode, the document EN 301 893 may be referred to.

FBE is a device that operates with a structure of transmission and reception at periodic times having a periodicity such as a fixed frame period (FFP). FBEs may require implementation of an LBT-based channel access mechanism to access a channel in an unlicensed operating band. LBT refers to a mechanism of performing clear channel assessment (CCA) before accessing a channel, and is performed in a single observation slot. The observation slot is a time during which it is identified whether there is a transmission from another radio local area network (RLAN) on the operating channel, and it is at least Z μs. The value of Z may vary depending on a country-specific regulation defined for the corresponding band. A device that initiates one or more transmissions is called an initiating device, and a device that responds based on the transmissions of the initiating device is called a responding device. An FBE may be either an initiating device or a responding device, or both. When the UE or the BS is capable of performing a transmission and LBT only in a specific direction rather than omni-directionally, such as through analog beamforming, a channel access mechanism may be allowed in which LBT is performed only in the specific beam direction, and upon success, a transmission is performed only in that direction, or a transmission is performed without LBT at all according to the regulations of a corresponding region and band.

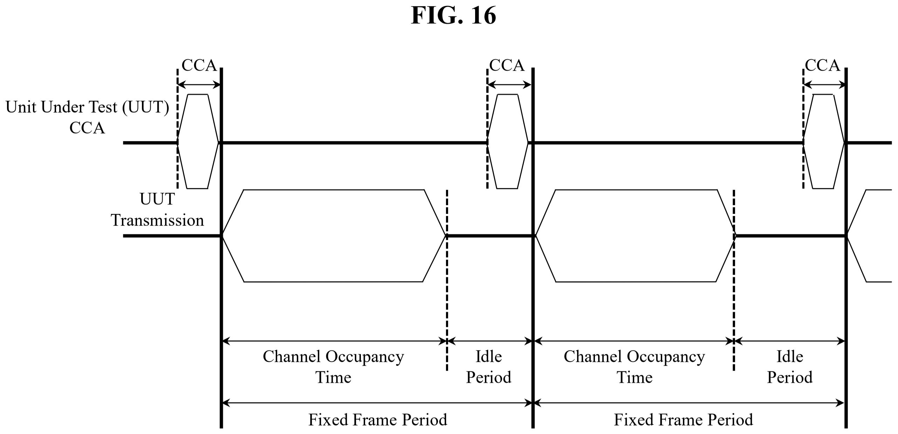

FIG. 16 illustrates timings for an FBE. Referring to FIG. 16, in a frame structure for the FBE mode, an FFP composed of a COT of a specific duration and an idle period is periodically repeated. The FBE performs CCA in an observation slot within the idle period. When the result of performing CCA in an observation slot within an idle period of FFP #N reveals that there is no other RLAN transmission on an operating channel (e.g., when an energy value measured in the observation slot is less than a CCA threshold), the FBE may start a transmission in a COT within FFP #(N+1). Supported FFP values may be declared by a device manufacturer. Depending on a regulation that should be complied with in each country, a device may have an FFP only once per specific period P. The duration of a COT within the FFP may not exceed X% of the length of the FFP, and the idle period should be configured to be a minimum of M μs and at least Y% of the COT duration, where P, X, M, and Y may be defined as different values according to the regulation. If beam-based directional LBT or initiating a transmission without performing LBT is allowed, the CCA procedure may refer to directional LBT in a specific beam direction. When no LBT is used as a channel access mechanism, an initiating device may immediately start a transmission at the boundary of an FFP (the starting time of a COT) without LBT.

LBT and CCA may refer to Category 2 (Cat-2) LBT (e.g., the Type 2 channel access procedure in 3GPP TS 37.213) in which a channel occupancy status is checked briefly during a specific time period, and in an FBE mode operation, Category 1 (Cat-1) LBT (no LBT) (e.g., the Type 2C channel access procedure in 3GPP TS 37.213) and Cat-2 LBT may be used by both the BS and the UE. Herein, Cat-2 LBT may be performed A μs just before the start of a next FFP in the idle period within a previous FFP, or it may be applied when the gap between transmissions, such as DL-to-DL, UL-to-DL, DL-to-UL, and UL-to-DL, is A μs or B μs. When the gap between transmissions is B μs, Cat-1 LBT may be applied, and a transmitted signal/channel after Cat-1 LBT may have a limited transmission length. Herein, A and B may be defined differently according to the operating frequency band regulation of a corresponding country.

When the BS or the UE operates in the FBE mode, the following methods may be considered.

(1) In some implementations, the BS may align the starting time of an FFP of the BS with the start time of a cell DTX ON duration.
(2) In some implementations, (when the duration of the FFP is greater than the cell DTX ON/OFF duration,) the BS may configure the ON duration and OFF duration of cell DTX to be a multiple of the duration of the FFP, or (when the cell DTX ON/OFF duration is greater than the duration of the FFP,), it may configure them simply to be the number of FFPs. For example, when an FFP periodicity is configured long enough to include one or more cell DTX ON durations and OFF durations (i.e., one or more cell DTX periodicities) within one FFP, the FFP duration may be configured to include one or more pairs of cell DTX ON/OFF durations within the FFP.
(3) In some implementations, when multiple BS FFPs are included within a cell DTX periodicity, the BS and the UE may operate by considering only FFPs having starting times within a cell DTX ON duration as valid, or for the last overlapping FFP, perform a transmission/reception operation by setting or assuming a COT to end at the end of the cell DTX ON duration.

In Implementation #2, similarly to Method (3)-D of Implementation #1, the starting time of the cell DTX active period may be variable in a floating manner, not fixed. Therefore, in Implementation #2, the following methods may be applied: Alt 1) a method in which the starting time of the active period floats but the ending time of the active period is always fixed (in this case, the same length is always guaranteed for a subsequent inactive period); Alt 2) a method in which when the starting time of the active period floats (i.e., when the starting time of the active period changes), the ending time of the active period also floats (in this case, the same length is always guaranteed for active periods), and the starting time of an inactive period after the active period also floats, while the ending time of the inactive period is always fixed; or Alt 3) a method in which even the ending time of the very last inactive period floats in Alt 2 above (in this case, the same length is always guaranteed for inactive periods as well). In Implementation #2, however, the floatable starting time may be limited to the starting time of an FFP, unlike Method (3)-D of Implementation #1.

For convenience, the above methods have been described from the perspective of a method for setting the starting time of a cell DTX ON duration according to an FFP structure and the relationship between an FFP duration and a periodicity of a cell DTX configuration, when the BS operates in the FBE mode in the cell DTX configuration. However, they may be equally applied to a method for setting the starting time of a cell DRX active period, a method for selecting valid FFPs among multiple UE FFPs included in a cell DRX ON duration, and a method for setting the relationship between a periodicity of a cell DRX configuration and an FFP duration, by replacing cell DTX with cell DRX and BS FFP with UE FFP, when the UE operates in the FBE mode and performs a transmission/reception operation in an FFP structure.

**<Implementation #3> Method for adjusting an energy detection (ED) threshold to be used during DL or UL LBT based on power change timing information, when a BS dynamically changes DL power**

(1) When the BS dynamically adapts DL power through (group-common or UE-specific) DCI, it may calculate an ED threshold (refer to XThreshold mentioned earlier) based on + alpha from a DCI transmission time or power change timing information in the DCI, and apply the changed power to DL LBT from a corresponding time.

(2) The UE may be pre-configured with a plurality of ED thresholds for UL LBT and adapt an ED threshold according to the DL power change of the BS.

> A. When a changed power value of the BS is indicated, the UE may automatically apply a UL LBT ED threshold linked to the power value, or the BS may directly indicate to the UE which ED threshold to apply.

In Implementation #3, the UE may perform a transmission/reception operation according to a separate configuration or in the absence of a separate configuration, by considering an entire discovery burst transmission window (DBTW) in which an SSB may be transmitted as a cell DTX active period, or perform a transmission/reception operation by considering a specific time period from a time when the UE first detects an SSB as a cell DTX active period. In another method, the UE and the BS may perform a transmission/reception operation by considering a COT including the transmission of a specific broadcast DL signal/channel (e.g., SIB1) including an SSB as a cell DTX active period, or even if the time period during which the DL signal/channel is transmitted is included in or overlaps with a cell DTX inactive period, by exceptionally always considering the time period as an additional active period. Additionally, in some implementations of the present disclosure, the BS may define a cell DTX active time period differently not only on the time axis but also on the frequency axis, particularly on an RB set basis. The BS may not perform DL LBT during the corresponding time period, and the UE may skip UL LBT during a cell DRX inactive time period.

The above-described Implementations #1 to #3 may be applied individually or together.

According to some implementations of the present disclosure, the energy saving gain of the BS and/or UE may be maximized by dynamically adjusting a cell DTX/DRX active/inactive period through adaptation of the cell DTX/DRX active/inactive period and/or a periodicity according to a result of performing LBT at the BS or UE.

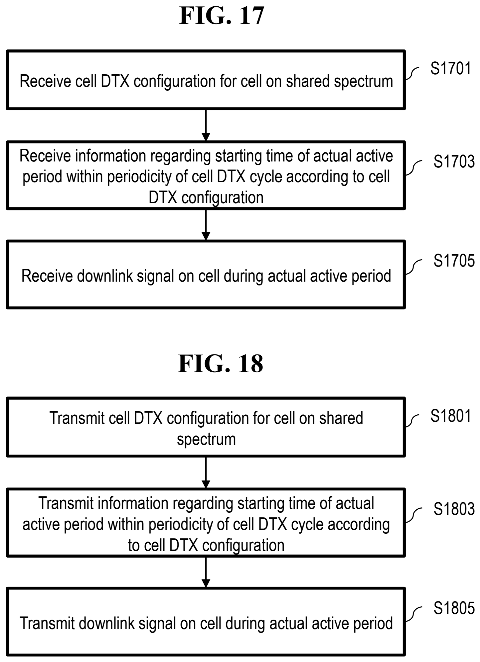

FIG. 17 illustrates a flow of DL signal reception by a UE according to some implementations of the present disclosure.

The UE may perform operations according to some implementations of the present disclosure in association with DL/UL signal receptions/transmissions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

The method performed by the UE or the operations in the UE, the processing device, the (non-transitory) computer-readable storage medium, and/or the computer program product may include receiving a cell DTX configuration for a cell on a shared spectrum (S1701), wherein the cell DTX configuration includes information regarding an active duration of a cell DTX cycle, information regarding a periodicity of the cell DTX cycle, and information regarding a starting time of the cell DTX cycle, determining an active period of the cell DTX cycle based on the cell DRX configuration, receiving information regarding a starting time of an actual active period within the periodicity of the cell DTX cycle (S1703), wherein the starting time of the actual active period is within the active period, and performing downlink reception on the cell during the actual active period (S1705). The actual active period may start within the active period.

In some implementations, a duration of the actual active period may be equal to the active duration of the cell DTX cycle.

In some implementations, an end of the actual active period may be identical to an end of the active period of the cell DTX cycle.

In some implementations, the information regarding the starting time of the actual active period may be received via GC DCI.

In some implementations, the information regarding the starting time of the actual active period may be received via a MAC CE.

In some implementations, receiving the information regarding the starting time of the actual active period may include receiving a DCI format.

In some implementations, a time unit in which the DCI format is detected may be determined as the starting time of the actual active period.

In some implementations, the DCI format may include information regarding a COT duration. The COT duration may be determined to be a duration of the actual active period.

In some implementations, the method or the operations may include receiving a configuration for a time window within the cell DTX cycle, in which the actual active period may begin, and based on the actual active period not starting within the time window, determining that there is no ON duration in a periodicity including the time window.

FIG. 18 illustrates a flow of DL signal transmission by a BS according to some implementations of the present disclosure.

The BS may perform operations according to some implementations of the present disclosure in association with DL/UL signal transmissions/receptions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

The method performed by the BS or the operations in the BS, the processing device, the (non-transitory) computer-readable storage medium, and/or the computer program code may include transmitting a cell DTX configuration for a cell on a shared spectrum, wherein the cell DTX configuration includes information regarding an active duration of a cell DTX cycle, information regarding a periodicity of the cell DTX cycle, and information regarding a starting time of the cell DTX cycle, determining a starting time of an actual active period in which downlink transmissions are possible on the cell, within an active period of the cell DTX cycle based on the cell DRX configuration, transmitting information regarding the starting time of the actual active period within the periodicity of the cell DTX cycle, and performing downlink transmission on the cell during the actual active period.

In some implementations, a duration of the actual active period may be equal to the active duration of the cell DTX cycle.

In some implementations, an end of the actual active period may be identical to an end of the active period of the cell DTX cycle.

In some implementations, the information regarding the starting time of the actual active period may transmitted via GC DCI.

In some implementations, the information regarding the starting time of the actual active period may be transmitted via a MAC CE.

In some implementations, transmitting the information regarding the starting time of the actual active period may include transmitting a DCI format.

In some implementations, a time unit in which the DCI format is detected may be determined as the starting time of the actual active period.

In some implementations, the DCI format may include information regarding a COT duration, and the COT duration may be determined to be a duration of the actual active period.

In some implementations, the method or the operations may include transmitting a configuration for a time window within the cell DTX cycle, in which the actual active period may begin, and based on the actual active period not starting within the time window, determining that there is no ON duration in a periodicity including the time window.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

**Claims**

**1.** A method of receiving a downlink signal by a user equipment (UE) in a wireless communication system, the method comprising:

receiving a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;
determining an active period of the cell DTX cycle based on the cell DRX configuration;
receiving information regarding a starting time of an actual active period within the periodicity of the cell DTX cycle, wherein the starting time of the actual active period is within the active period; and
performing downlink reception on the cell during the actual active period.

2. The method of claim 1, wherein a duration of the actual active period is equal to the active duration of the cell DTX cycle.

3. The method of claim 1, wherein an end of the actual active period is identical to an end of the active period of the cell DTX cycle.

4. The method of claim 1, wherein the information regarding the starting time of the actual active period is received via group-common downlink control information.

5. The method of claim 1, wherein the information regarding the starting time of the actual active period is received via a media access control control element.

6. The method of claim 1, wherein receiving the information regarding the starting time of the actual active period includes receiving a downlink control information format.

7. The method of claim 6, wherein a time unit in which the downlink control information format is detected is determined as the starting time of the actual active period.

8. The method of claim 6, wherein the downlink control information format includes information regarding a channel occupancy time (COT) duration, and
wherein the COT duration is determined to be a duration of the actual active period.

9. The method of claim 1, comprising:

receiving a configuration for a time window within the cell DTX cycle, in which the actual active period is startable; and
based on the actual active period not starting within the time window, determining that there is no ON duration in a periodicity including the time window.

10. A user equipment (UE) for receiving a downlink signal in a wireless communication system, the UE comprising:

at least one transceiver;
at least one processor; and
at least one computer memory operably connectable to the at least one processor and storing instructions that, when executed, cause the at least one processor to perform operations comprising:

receiving a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;
determining an active period of the cell DTX cycle based on the cell DRX configuration;
receiving information regarding a starting time of an actual active period within the periodicity of the cell DTX cycle, wherein the starting time of the actual active period is within the active period; and
performing downlink reception on the cell during the actual active period.

11. A processing device in a wireless communication system, comprising:

at least one processor; and
at least one computer memory operably connectable to the at least one processor and storing instructions that, when executed, cause the at least one processor to perform operations comprising:

receiving a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;

determining an active period of the cell DTX cycle based on the cell DRX configuration;

receiving information regarding a starting time of an actual active period within the periodicity of the cell DTX cycle, wherein the starting time of the actual active period is within the active period; and

performing downlink reception on the cell during the actual active period.

12. A computer-readable storage medium storing at least one program code including instructions that, when executed, cause at least one processor to perform operations comprising:

receiving a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;

determining an active period of the cell DTX cycle based on the cell DRX configuration;

receiving information regarding a starting time of an actual active period within the periodicity of the cell DTX cycle, wherein the starting time of the actual active period is within the active period; and

performing downlink reception on the cell during the actual active period.

13. A method of transmitting a downlink signal to a user equipment (UE) by a base station (BS) in a wireless communication system, the method comprising:

transmitting a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;

determining a starting time of an actual active period in which downlink transmissions are possible on the cell, within an active period of the cell DTX cycle based on the cell DRX configuration;

transmitting information regarding the starting time of the actual active period within the periodicity of the cell DTX cycle; and

performing downlink transmission on the cell during the actual active period.

14. A base station (BS) for transmitting a downlink signal to a user equipment (UE) in a wireless communication system, the BS comprising:

at least one transceiver;

at least one processor; and

at least one computer memory operably connectable to the at least one processor and storing instructions that, when executed, cause the at least one processor to perform operations comprising:

transmitting a cell discontinuous transmission (DTX) configuration for a cell on a shared spectrum, wherein the cell DTX configuration includes information regarding an active duration of a cell DTX cycle, information regarding a periodicity of the cell DTX cycle, and information regarding a starting time of the cell DTX cycle;

determining a starting time of an actual active period in which downlink transmissions are possible on the cell, within an active period of the cell DTX cycle based on the cell DRX configuration;

transmitting information regarding the starting time of the actual active period within the periodicity of the cell DTX cycle; and

performing downlink transmission on the cell during the actual active period.

15. The BS of claim 14, wherein a duration of the actual active period is equal to the active duration of the cell DTX cycle.

16. The BS of claim 14, wherein an end of the actual active period is identical to an end of the active period of the cell DTX cycle.

17. The BS of claim 14, wherein the information regarding the starting time of the actual active period is transmitted via group-common downlink control information.

18. The BS of claim 14, wherein the information regarding the starting time of the actual active period is transmitted via a media access control control element.

19. The BS of claim 14, wherein transmitting the information regarding the starting time of the actual active period includes transmitting a downlink control information format.

20. The BS of claim 19, wherein a time unit in which the downlink control information format is detected is determined as the starting time of the actual active period.

21. The BS of claim 19, wherein the downlink control information format includes information regarding a channel occupancy time (COT) duration, and
wherein the COT duration is determined to be a duration of the actual active period.

22. The BS of claim 14, comprising:

transmitting a configuration for a time window within the cell DTX cycle, in which the actual active period is startable; and
based on the actual active period not starting within the time window, determining that there is no ON duration in a periodicity including the time window.

## FIG. 1

1

100e — Home Appliance

100f — IoT device

400 — AI Server/ device

100a — Robot

150a

150a

200 200

Network (5G/6G)

200

200 200

150a

150a

150a

100d — Hand-held device

100c — XR device

100b-1 — Vehicle

100b-2 — Vehicle

150b

EP 4 718 917 A1

# FIG. 2

# FIG. 3

# FIG. 4

| ... | One Frame (10 ms) | ... |

| ... | Half-Frame (5ms) | Half-Frame (5ms) | ... |

| ... | Subframe 0 (1ms) | ... | Subfrae 4 (1ms) | Subframe 5 (1ms) | ... | Subframe 9 (1ms) | ... |

subframe ($T_{sf}$ = 1ms)

| 15kHz | Slot (14 symbols) |

1ms

| 30kHz | Slot 0 (14 symbols) | Slot 1 |

500us

| 60kHz | Slot 0 (14 symbols) | Slot 1 | Slot 2 | Slot 3 |

250us

| 120kHz | Slot 0 (14 symbols) | Slot 1 | Slot 2 | Slot 3 | Slot 4 | Slot 5 | Slot 6 | Slot 7 |

125us

# FIG. 5

# FIG. 6

Initial Cell Search — PSS/SSS & [DL RS] & PBCH — S11

System Information Reception — PDCCH/PDSCH (BCCH) — S12

Random Access Procedure — PRACH (S13), PDCCH/PDSCH (S14), PUSCH (S15), PDCCH/PDSCH (S16)

General DL/UL Tx/Rx — PDCCH/PDSCH (S17), PUSCH/PUCCH (S18)

- DL/UL HARQ-ACK
- UE CSI report via PUSCH and/or PUCCH

EP 4 718 917 A1

# FIG. 7

K₀=0, S=7, L=7, PDSCH Mapping Type B

$K_0=0$, $S=7$, $L=7$,
PDSCH Mapping Type B

$K_0=1$, $S=4$, $L=4$,
PDSCH Mapping Type B

$K_0=2$, $S=1$, $L=9$,
PDSCH Mapping Type A

Symbol index

▨ Symbol containing DMRS          ▧ Symbol containing PDSCH

(a) Example of PDSCH time domain resource allocation

$K_2=1$, $S=2$, $L=10$,
PUSCH Mapping Type B

$K_2=2$, $S=0$, $L=12$,
PUSCH Mapping Type A

Symbol index

▨ Symbol containing DMRS          ▧ Symbol containing PUSCH

(b) Example of PUSCH time domain resource allocation

EP 4 718 917 A1

38

# FIG. 8

DL assingment-to-PDSCH offset (K0)

PDCCH

slot

PDSCH

PUCCH

PDSCH-to-HARQ-ACK reporting offset (K1)

# FIG. 9

Unoccupied

Occupied

Channel Occupancy Time

Channel Occupancy Time

Extended CCA

CCA

# FIG. 10

frequency

LBT-SB#(K-1)
(e.g., 20MHz)

. . .

BWP

LBT-SB#1
(e.g., 20MHz)

LBT-SB#0
(e.g., 20MHz)

# FIG. 11

```
Start CAP ——— S1210
   │
   ▼
 Step 1 ——— S1220
   │
   ▼      S1230
 Step 4 ————————— Y ———▶ Terminate CAP ———▶ Transmit Tx bust
   │                        S1232              S1234
   │ N
   ▼
 Step 2 ——— S1240
   │
   ▼      S1250
 Step 3 ——— Y
   │
   │ N    S1260
   ▼
 Step 5 ◀──
   │
   ▼      S1270
 Step 6 —— Y / N
```

# FIG. 12

```
┌─────────────────────┐
│      Start CAP      │ ─── S1510
└─────────────────────┘
           │
           ▼
┌─────────────────────┐
│       Step 1        │ ─── S1520
└─────────────────────┘
           │                    S1530
           ▼
        ╱─────────╲                    Y    ┌──────────────┐      ┌──────────────┐
       ╱   Step 4  ╲ ──────────────────────│ Terminate CAP│ ────▶│Transmit Tx bust│
       ╲           ╱                         └──────────────┘      └──────────────┘
        ╲─────────╱                              S1532                 S1534
           │ N
           ▼
┌─────────────────────┐
│       Step 2        │ ─── S1540
└─────────────────────┘
           │          S1550
           ▼
     Y  ╱─────────╲
 ◄─────╱   Step 3  ╲
       ╲           ╱
        ╲─────────╱
           │ N        S1560
           ▼
┌─────────────────────┐
│       Step 5        │◄───┐
└─────────────────────┘    │
           │     S1570      │
           ▼                │
  Y  ╱─────────╲   N        │
◄───╱   Step 6  ╲───────────┘
    ╲           ╱
     ╲─────────╱
```

# FIG. 13

On Duration   Opportunity for DRX   On Duration

Monitor
PDCCH

DRX cycle

# FIG. 14

PDCCH
reception

time

Short
DRX cycle

Short
DRX cycle

Long DRX cycle

Long DRX cycle

□  Time while drx-onDurationTimer is running

⬚  Time while drx-InactivityTimer is running

# FIG. 15

COT initiated by BS (or UE)

ON duration = X

T1

T2  T3

T4

time

Cell DTX periodicity (or Cell DRX periodicity)

□  Cell DTX active period (or Cell DRX active period)

# FIG. 16

# FIG. 17

| |
|---|
| Receive cell DTX configuration for cell on shared spectrum | S1701

| |
|---|
| Receive information regarding starting time of actual active period within periodicity of cell DTX cycle according to cell DTX configuration | S1703

| |
|---|
| Receive downlink signal on cell during actual active period | S1705

# FIG. 18

| |
|---|
| Transmit cell DTX configuration for cell on shared spectrum | S1801

| |
|---|
| Transmit information regarding starting time of actual active period within periodicity of cell DTX cycle according to cell DTX configuration | S1803

| |
|---|
| Transmit downlink signal on cell during actual active period | S1805

## INTERNATIONAL SEARCH REPORT

| International application No. |
|---|
| **PCT/KR2024/006892** |

### A. CLASSIFICATION OF SUBJECT MATTER

**H04W 52/02**(2009.01)i; **H04W 76/28**(2018.01)i; **H04W 72/232**(2023.01)i; **H04W 74/0808**(2024.01)i; **H04W 24/08**(2009.01)i; **H04W 52/14**(2009.01)i

According to International Patent Classification (IPC) or to both national classification and IPC

### B. FIELDS SEARCHED

Minimum documentation searched (classification system followed by classification symbols)

H04W 52/02(2009.01); H04L 5/00(2006.01); H04W 48/16(2009.01); H04W 72/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 불연속송신(cell DTX), 활성 구간(active period), DTX 사이클(cycle), 기지국(BS), 사용자기기(UE)

### C. DOCUMENTS CONSIDERED TO BE RELEVANT

| Category* | Citation of document, with indication, where appropriate, of the relevant passages | Relevant to claim No. |
|---|---|---|
| X<br>A | SAMSUNG. Enhancements on cell DTX/DRX mechanism. R1-2303142, 3GPP TSG RAN WG1 #112bis-e, e-Meeting. 07 April 2023.<br>See pages 2 and 5-8; and figures 4-6. | 1-6,10-19<br>7-9,20-22 |
| A | MODERATOR (INTEL CORPORATION). Discussion Summary #1 for enhancements on cell DTX/DRX mechanism. R1-2301815, 3GPP TSG RAN WG1 Meeting #112. Athens, Greece. 03 March 2023.<br>See section 2.4. | 1-22 |
| A | US 2023-0056813 A1 (INTERDIGITAL PATENT HOLDINGS, INC.) 23 February 2023 (2023-02-23)<br>See paragraphs [0184]-[0205]. | 1-22 |
| A | US 2023-0007587 A1 (QUALCOMM INCORPORATED) 05 January 2023 (2023-01-05)<br>See paragraphs [0085]-[0086]. | 1-22 |
| A | JP 2019-527992 A (QUALCOMM INCORPORATED) 03 October 2019 (2019-10-03)<br>See paragraphs [0013]-[0016]. | 1-22 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **10 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/006892**

| Patent document cited in search report | | | Publication date (day/month/year) | Patent family member(s) | | | Publication date (day/month/year) |
|---|---|---|---|---|---|---|---|
| US | 2023-0056813 | A1 | 23 February 2023 | AR | 079866 | A1 | 22 February 2012 |
| | | | | CN | 102714877 | A | 03 October 2012 |
| | | | | EP | 2522192 | A1 | 14 November 2012 |
| | | | | EP | 3413679 | A1 | 12 December 2018 |
| | | | | JP | 2013-516927 | A | 13 May 2013 |
| | | | | JP | 2015-092689 | A | 14 May 2015 |
| | | | | JP | 5990464 | B2 | 14 September 2016 |
| | | | | KR | 10-2012-0123392 | A | 08 November 2012 |
| | | | | TW | 201146067 | A | 16 December 2011 |
| | | | | US | 11470551 | B2 | 11 October 2022 |
| | | | | US | 2011-0170420 | A1 | 14 July 2011 |
| | | | | US | 2015-0023177 | A1 | 22 January 2015 |
| | | | | US | 8854976 | B2 | 07 October 2014 |
| | | | | WO | 2011-085270 | A1 | 14 July 2011 |
| US | 2023-0007587 | A1 | 05 January 2023 | CN | 117561791 | A | 13 February 2024 |
| | | | | EP | 4364526 | A1 | 08 May 2024 |
| | | | | US | 11930451 | B2 | 12 March 2024 |
| | | | | WO | 2023-278026 | A1 | 05 January 2023 |
| JP | 2019-527992 | A | 03 October 2019 | AU | 2017-310233 | A1 | 24 January 2019 |
| | | | | BR | 112019002349 | A2 | 18 June 2019 |
| | | | | CA | 3029983 | A1 | 15 February 2018 |
| | | | | CA | 3029983 | C | 07 November 2023 |
| | | | | CN | 109644404 | A | 16 April 2019 |
| | | | | EP | 3498044 | A1 | 19 June 2019 |
| | | | | EP | 3498044 | B1 | 26 July 2023 |
| | | | | JP | 7000416 | B2 | 19 January 2022 |
| | | | | US | 11140742 | B2 | 05 October 2021 |
| | | | | US | 2018-0049270 | A1 | 15 February 2018 |
| | | | | WO | 2018-031121 | A1 | 15 February 2018 |

Form PCT/ISA/210 (patent family annex) (July 2022)